# EUROPÄISCHE PATENTSCHRIFT

(11) **EP 1 129 872 B1**
(45) Veröffentlichungstag und Bekanntmachung des Hinweises auf die Patenterteilung: **03.05.2006**
(21) Anmeldenummer: 01104700.8
(22) Anmeldetag: 26.02.2001
(51) Int. Cl.: B60J 1/20

(54) **Rolloanordnung für ein Kraftfahrzeugfenster**
Roller blind for a car window
Store enroulable pour une lunette de véhicule

(30) Priorität: 02.03.2000 DE 10010026
(43) Veröffentlichungstag der Anmeldung: 05.09.2001
(73) Patentinhaber: Volkswagen Aktiengesellschaft, 38436 Wolfsburg (DE)
(72) Erfinder: Hajek, Uwe, 38853 Wasbüttel (DE)

(56) Entgegenhaltungen:
- EP-A- 0 916 532
- DE-U- 29 621 563

## Beschreibung

Die Erfindung betrifft eine Rolloanordnung für ein Kraftfahrzeugfenster gemäß dem Oberbegriff des Patentanspruchs 1.

Bei vielen Rolloanordnungen mit einer im Fahrzeugaufbau, also beispielsweise unterhalb einer Tür- oder Seitenwandverkleidung, angeordneten Rolle zum Aufwickeln bzw. Abziehen einer flexiblen Rollobahn ist die Tatsache unschön, daß ein Durchtrittsspalt für die Rollobahn im Fahrzeugaufbau, also beispielsweise in der Wandverkleidung, stets sichtbar ist. Ein technisches Problem besteht insofern, als häufig die obere Randbegrenzung des Fensters in ihrem Verlauf einer konkaven Dachkontur darüber angepaßt ist, wodurch ein oberster Fensterbereich häufig durch die Rolloanordnung nicht abgedeckt ist, so daß in unerwünschter Weise dort partiell Sonnenlicht eindringen kann.

Beide Schwierigkeiten sucht die gattungbildende EP 0 394 123 B1 durch schwenkbare Anlenkung eines einen etwa C-förmigen Querschnitt besitzenden Zugprofils am oberen Ende der Rollobahn zu vermeiden; dieses Zugprofil soll einschließlich des Verlaufs des oberen Randes der Rollobahn so ausgelegt sein, daß es nach Einhängen in fahrzeugseitige Arretierungen, d.h. bei maximal ausgezogener Rollobahn, entsprechend der Kontur des oberen Fensterbereichs in zwei zueinander senkrechten Ebenen gebogen werden kann. Diese mit einer nicht linearen oberen Kante der Rollobahn arbeitende Vorrichtung ist einerseits schwierig zu handhaben, andererseits erfordert sie fahrzeugseitige Anpassungen, insbesondere eine Anpassung des Verlaufs des Spalts zum Durchtritt der Rollobahn. Die FR 2774947 A1 zeigt eine ebenfalls nach dem gattungsgemäßen Prinzip arbeitende Vorrichtung, jedoch mit einem im Querschnitt winkelförmigen Zugprofil, dessen einer Schenkel bei im wesentlichen horizontal verlaufendem, sich fahrzeugseitig abstützendem Zugprofil bei maximal aufgewickelter Rollobahn in den Spalt zum Durchtritt der Rollobahn hineinragt und diesen damit verdeckt. Dieser Spalt ist identisch mit dem Spalt zum Durchtritt der heb- und senkbaren Fensterscheibe. Über die Lage dieses winkelförmigen Zugprofils bei maximal ausgezogener Rollobahn sowie über die sonstige Form dieses Zugprofils ist nichts gesagt.

Der Erfindung liegt die Aufgabe zugrunde, eine gattungsgemäße Rolloanordnung zu schaffen, die mit einfachen Mitteln sowohl die Abdeckung des Spalts zum Durchtritt der Rollobahn bei maximal aufgewickelter Rollobahn als auch die vollständige Abschattung des Fensters auch in seinem obersten Bereich bei maximal ausgezogener Rollobahn sicherstellt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Die Erfindung löst die definierte Aufgabe also in bestechend einfacher Form durch die Verwendung eines mit dem oberen Ende der Rollobahn in einem mittleren Querschnittsbereich schwenkbar verbundenen Flachprofils, dessen einer Profilteil bzw. dessen eine Profilhälfte, vorzugsweise die dem Fahrzeuginnenraum zugekehrte, einen Randverlauf aufweist, der dem Verlauf der definierten Dachkontur angepaßt ist. Während das Flachprofil bei maximal aufgewickelter Rollobahn praktisch horizontal verläuft und sich mit seinen beiden Querschnittsbereichen, die durch die Zone des Angriffs des oberen Randes der Rollobahn getrennt bzw. verbunden sind, auf der Verkleidung oder dergleichen des Fahrzeugs an dieser Stelle abstützt und dabei sicher den Durchtrittsspalt für die Rollobahn abdeckt, weist das Flachprofil nach Schwenkung um etwa 90° mit seinem definierten profilierten Randbereich praktisch nach oben in Richtung auf die konkave Dachpartie, so daß das Flachprofil jetzt den obersten Fensterbereich mit Sicherheit abschattet.

Ein Ausführungsbeispiel der Erfindung wird im folgenden anhand der Zeichnung erläutert, deren Figur 1 einen senkrechten Querschnitt durch die entsprechende Seitenwandpartie eines Kraftfahrzeugs wiedergibt, während Figur 2 eine Draufsicht auf die Fensterbrüstung und Figur 3 perspektivisch ein mit der Erfindung ausgerüstetes Kraftfahrzeug zeigt.

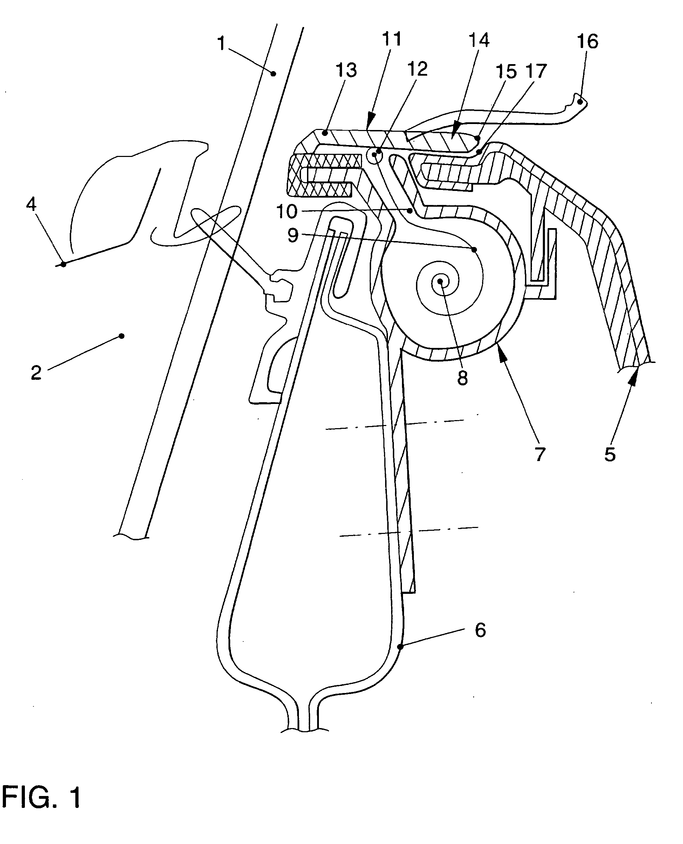

Betrachtet man zunächst Figur 1, so erkennt man bei 1 eine Fensterscheibe und bei 2 einen für diese vorgesehenen Fensterscheibenschacht; bei 4 ist demgemäß das Außenblech und bei 5 die mit einer Kaschierung bekannter Art versehene Türinnenverkleidung angedeutet. Auf diese Einzelheiten braucht nicht näher eingegangen zu werden, da sie einerseits bestens bekannt sind und andererseits die Erfindung keine spezielle Ausbildung erfordert.

Am Türinnenblech 6 ist die Aufnahme 7 für die Rolle 8 befestigt, die als Vorratsrolle für die aus flexiblem Material bestehende Rollobahn 9 dient. Diese kann durch den ihr zugeordneten Spalt 10 in der Türverkleidung 5 und in der Rolloaufnahme 7 mehr oder weniger weit von der Rolle 8 gegen Federkraft abgewickelt und zumindest nach maximalem Abwickeln bzw. Ausziehen mit an sich bekannten Arretierungen am Fahrzeug festgelegt werden. Diese Arretierungen greifen an dem Flachprofil 11 an, das bei 12 um eine längsverlaufende Achse schwenkbar mit dem oberen Rand der Rollobahn 9 verbunden ist. Die Rollobahn greift etwa in der Querschnittsmitte des Flachprofils 11 an diesem an und unterteilt dieses demgemäß in zwei Querschnittsbereiche 13 und 14, von denen der letztere eine längsverlaufende, in der Darstellung nach rechts weisende Kante 15 besitzt, die in ihrem Verlauf der senkrechten Kontur des darüber befindlichen Fahrzeugdachs angepaßt ist. An diesem rechten Querschnittsbereich 14 greift auch die Zughandhabe 16 an, beispielsweise eine Schlaufe oder ein Bügel. Nicht dargestellt sind Arretiermittel zum Einhängen des Flachprofils 11 bei maximal ausgezogener Rollobahn 9, d.h. bei in Wirkstellung befindlicher Rolloanordnung.

Dargestellt ist in Figur 1 die Lage des Flachprofils 11 bei maximal aufgewickelter Rollobahn, d.h. bei nicht abgeschattetem Fenster. Wie unmittelbar aus Figur 1 ersichtlich, verläuft das Flachprofil 11 mit seiner Querschnittsebene praktisch horizontal und stützt sich mit beiden Querschnittsbereichen 13 und 14 fahrzeugseitig beiderseits des Spalts 10 ab, so daß es diesen sicher abdeckt. In der Türverkleidung 5 erkennt man ferner die Vertiefung 17, deren rechter Begrenzungsrand hinsichtlich seines Verlaufs in Längsrichtung des Fahrzeugs dem Verlauf der Kante 15 des Flachprofils 11 und damit indirekt dem Verlauf der Dachkontur angepaßt ist.

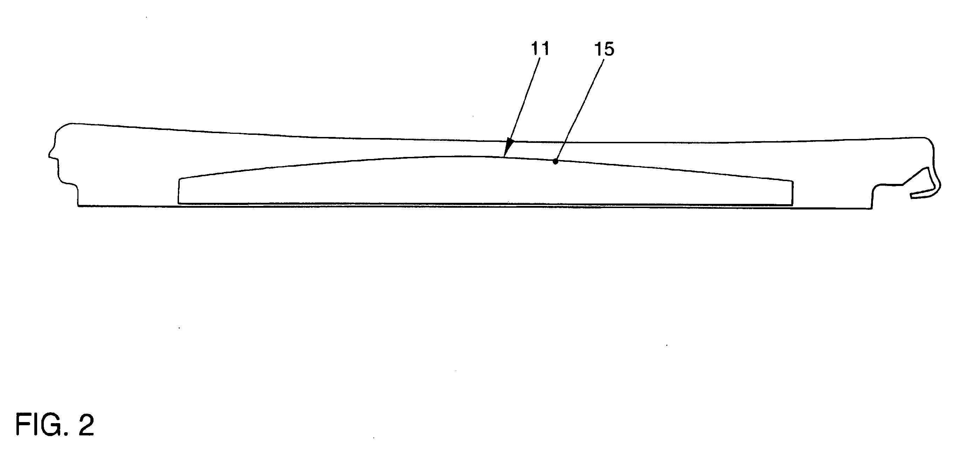

In Figur 2 ist in Draufsicht besonders der Verlauf der in Richtung Fahrzeuginnenraum weisenden Kante 15 des Flachprofils 11 hervorgehoben. Auch diese Darstellung bezieht sich auf die Verhältnisse bei maximal aufgewickelter Rollobahn 9.

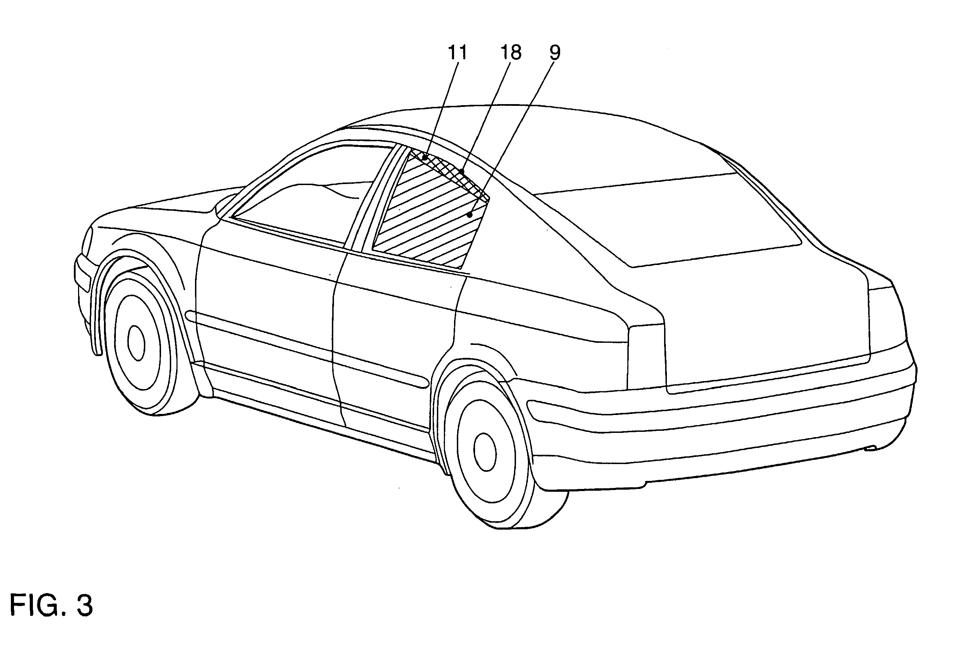

Figur 3 zeigt dagegen perspektivisch schräg von hinten ein Kraftfahrzeug, bei dem die Rollobahn 9 sich in ihrer maximal ausgezogenen Stellung und damit in ihrer Wirkstellung befindet. Die Dachkontur ist bei 18 angedeutet; sie ist, betrachtet vom Fenster her, konkav. Der oberste Bereich des Fensters wird durch das jetzt um seine Anlenkung 12 an der Rollobahn 9 um etwa 90° mit seiner profilierten Kante 15 nach oben weisend verschwenkte Flachprofil 11 abgedeckt. Dieses Flachprofil erfüllt demgemäß drei Aufgaben: Zum einen dient es zum Aufbringen der erforderlichen Zugkräfte beim Aufspannen des Rollos, zum zweiten bewirkt es dann die Abschattung des obersten Fensterbereichs, und zum dritten bildet es bei maximal aufgewickelter Rollobahn, d.h. während Nichtbetriebszeiten der Rolloanordnung, eine Abdeckung des fahrzeugseitigen Durchtrittsspalts für die Rollobahn.

## Patentansprüche

1. Rolloanordnung für ein Kraftfahrzeugfenster, insbesondere ein Seitenfenster, dessen obere Rahmenkontur durch eine gekrümmte Dachkontur des Fahrzeugs bestimmt ist, mit einer innerhalb des Fahrzeugaufbaues unterhalb des Fensters angeordneten Rolle zum Aufwickeln bzw. Abziehen einer flexiblen Rollobahn durch einen nach oben weisenden Spalt im Fahrzeugaufbau, die an ihrem oberen Ende in Schwenkverbindung mit einem Zugprofil steht, das bei maximal aufgewickelter Rollobahn den Spalt abdeckt und dem fahrzeugseitige Arretierungen zum Einhängen bei maximal ausgezogener Rollobahn zugeordnet sind, **gekennzeichnet durch** ein Flachprofil (11) als Zugprofil mit zwei **durch** die Schwenkverbindung (12) gebildeten Querschnittsbereichen (13, 14), mit denen es sich bei maximal aufgewickelter Rollobahn (9) mit etwa horizontaler Querschnittsausrichtung beiderseits des Spalts (10) abstützt und von denen einer (14) eine der Dachkontur (18) angepaßte Randkontur (15) hat, die bei eingehängtem Flachprofil (11) nach oben weist.

2. Rolloanordnung nach Anspruch 1, **dadurch gekennzeichnet, daß** zumindest eine Zughandhabe (16) an dem die angepaßte Randkontur (15) tragenden Querschnittsbereich (14) angreift.

3. Rolloanordnung nach Anspruch 1 oder 2, **gekennzeichnet durch** eine die angepaßte Randkontur (15) berücksichtigende fahrzeugseitige Vertiefung (17) zur Aufnahme des Flachprofils (11) bei maximal aufgewickelter Rollobahn (9).

## Claims

1. Roller blind for a car window, in particular a side window, the upper frame contour of which is determined by a curved roof contour of the vehicle, with a roller, which is arranged below the window within the vehicle body, for winding-up and pulling-out a flexible roller-blind web through an upwardly facing gap in the vehicle body, the said roller being pivotally connected at its upper end to a tension profile which, when the roller-blind web is wound up to the maximum extent, covers the gap and to which locking means on the vehicle are assigned for hooking into when the roller-blind web is pulled out to the maximum extent, **characterized by** a flat profile (11) as tension profile with two cross-sectional regions (13, 14) which are formed by the pivoting connection (12) and with which it is supported, when the roller-blind web (9) is wound up to the maximum extent, on both sides of the gap (10) with an approximately horizontal cross-sectional alignment and of which one (14) has an edge contour (15) which is matched to the roof contour (18) and faces upwards when the flat profile (11) is hooked in.

2. Roller blind according to Claim 1, **characterized in that** at least one pull handle (16) acts on the cross-sectional region (14) carrying the matching edge contour (15).

3. Roller blind according to Claim 1 or 2, **characterized by** a depression (17), which takes the matching edge contour (15) into account and is on the vehicle, for receiving the flat profile (11) when the roller-blind web (9) is wound up to the maximum extent.

## Revendications

1. Agencement de store enroulable pour une fenêtre de véhicule automobile, notamment une fenêtre latérale, dont le contour de cadre supérieur est défini par un contour courbe du toit du véhicule, avec un store enroulable disposé sous la fenêtre à l'intérieur de la carrosserie du véhicule, pour enrouler ou tirer un store en bande flexible par une fente tournée vers le haut dans la carrosserie du véhicule, qui est en liaison de pivotement à son extrémité supérieure avec un profilé de traction qui recouvre la fente lorsque le store en bande est complètement enroulé et auquel sont associés des blocage d'accrochage du côté du véhicule lorsque le store en bande est complètement tiré, **caractérisé par** un profilé plat (11) servant de profilé de traction avec deux régions de section transversale (13, 14) formées par la connexion pivotante (12), avec lesquelles il s'appuie de part et d'autre de la fente (10) avec une orientation approximativement horizontale en section transversale lorsque le store en bande (9) est complètement enroulé et a un contour de bord (15) adapté au contour du toit (18), lequel est tourné vers le haut lorsque le profilé plat (11) est accroché.

2. Agencement de store enroulable selon la revendication 1, **caractérisé en ce qu'**au moins une manette de traction (16) vient en prise sur la région en section transversale (14) portant le contour de bord adapté (15).

3. Agencement de store enroulable selon la revendication 1 ou 2, **caractérisé par** un renfoncement (17) du côté du véhicule tourné vers le contour de bord adapté (15), pour recevoir le profilé plat (11) lorsque le store en bande (9) est complètement enroulé.
